# EUROPEAN PATENT SPECIFICATION

(11) **EP 1 654 931 B1**
(45) Date of publication and mention of the grant of the patent: **08.04.2015**
(21) Application number: 05020714.1
(22) Date of filing: 22.09.2005
(51) Int. Cl.: A21B 3/04, F24C 15/32

(54) **Steam generator for steam oven**
Dampferzeuger für einen Dampfgarofen
Générateur de vapeur pour un four à vapeur

(30) Priority: 05.11.2004 KR 2004089904
(43) Date of publication of application: 10.05.2006
(73) Proprietor: LG Electronics Inc., Yeongdeungpo-gu Seoul 150-721 (KR)
(72) Inventor: Yang, Jae Kyung, Guro-ku Seoul 152-050 (KR); Kim, Yang Kyeong, Buchun-si Kyungki-do 420-709 (KR)
(74) Representative: Ter Meer Steinmeister & Partner

(56) References cited:
- EP-A2- 0 277 337
- DE-C1- 4 403 386
- JP-A- 9 004 849
- JP-A- 54 059 373
- US-A- 6 100 502
- US-A- 6 101 925

## Description

### BACKGROUND OF THE INVENTION

### Field of the Invention

The present invention relates to a steam oven for cooking food using steam, and more particularly to a steam generator for a steam oven, which generates steam of a high temperature and supplies the steam to the inside of a cooking chamber.

### Description of the Related Art

Generally, steam ovens cook food using steam to make various dishes, such as steamed dishes.

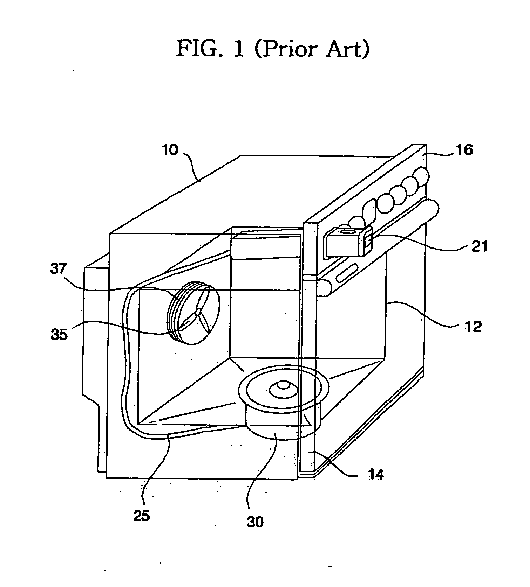

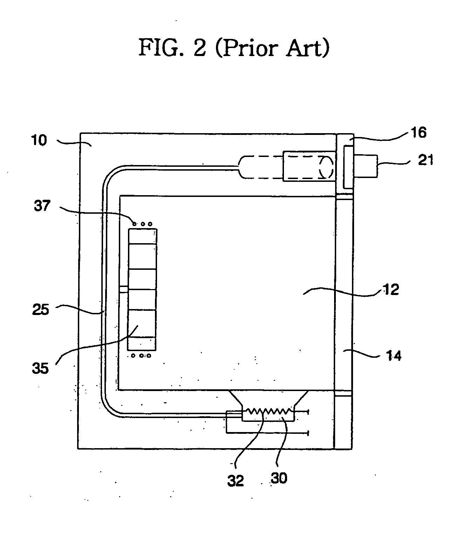

FIG. 1 is a schematic perspective view of a steam oven having a conventional steam generator, and FIG. 2 is a sectional view of the steam oven shown in FIG. 1.

As shown in FIG. 1, the steam oven comprises a cabinet 10, a cooking chamber 12 installed in the cabinet 10, and a door 14 for opening and closing the cooking chamber 12. A control panel 16, provided with various operating switches and display devices, is installed on the lower part of the front surface of the cabinet 10.

The steam generator provided in the steam oven includes a water injection unit 21 inserted into the control panel 16 toward the inside of the cabinet 10, a steam generation unit 30 installed on the bottom of the inside of the cabinet 10 for generating steam, and a water supply pipe 25 connected between the water injection unit 21 and the steam generation unit 30.

A heater 32 for heating water is installed in the steam generation unit 30, and a convection fan 35 for circulating air in the cooking chamber 12 and a convection heater 37 for heating the air in the cooking chamber 12 are installed in the rear part of the cooking chamber 12. That is, the convection fan 35 is operated in the cooking chamber 12 based on the cooking method to induce the uniform distribution of steam, and, if necessary, the convection heater 37 is operated to increase the temperature of the steam so that the cooking of food in the cooking chamber 12 can be performed at a high temperature.

When a user directly injects water to the inside of the above steam oven through the water injection unit 21, the supplied water passes through the water supply pipe 25 by gravity and is introduced into the steam generation unit 30 having the heater 32. Then, the water is heated by the heater 32, thereby generating steam. The generated steam flows into the cooking chamber 12, and is circulated by the convection fan 35, thereby cooking food placed in the cooking chamber 12.

The conventional steam oven shown in FIGS. 1 and 2 is structured such that the steam generation unit 30 is installed in the cooking chamber 12. However, another conventional steam oven, which is shown in FIG. 3, is structured such that a steam generation unit 30' is installed outside a cooking chamber 12' and steam generated from the steam generation unit 30' is introduced into the cooking chamber 12' to cook food placed in the cooking chamber 12'.

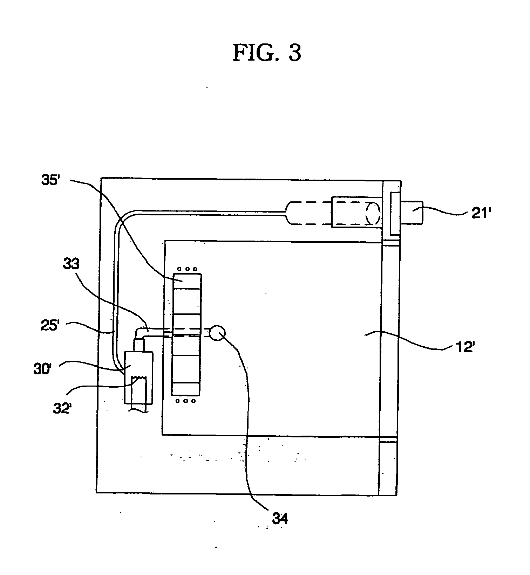

In FIG. 3, reference numeral 21' represents a water injection unit, reference numeral 25' represents a water supply pipe, reference numeral 32' represents a heater, reference numerals 33 and 34 respectively represent a steam inlet pipe and a steam inlet port for supplying steam into the cooking chamber 12', and reference numeral 35' represents a convection fan.

Since the above steam generation units 30 and 30' of the conventional steam ovens heat water using the heaters 32 and 32' to generate steam under the condition that the steam generation units 30 and 30' store the water, the conventional steam generators 30 and 30' are disadvantageous in that the time to generate the steam is long and the heaters 32 and 32' have large capacities.

Particularly, when the steam generation unit 30 is installed in the cooking chamber 12, as shown in FIGS. 1 and 2, the water remaining in the steam generation unit 30 after cooking must be eliminated, thereby causing troublesomeness to users.

Further, when the steam generation unit 30' is installed outside the cooking chamber 12', as shown in FIG. 3, the overall size of the steam oven is increased but the size of the cooking chamber 12' is relatively decreased, and the independent external steam generation unit 30' causes the complication of the structure of the steam oven and problems in insulating the steam oven.

JP 09004849 A, shows an oven with steam generating means for generating steam, which includes a water tank for storing water, a water injection unit for supplying water from the tank to a steam generator unit, a flow adjusting unit installed in a conduit between the tank and the steam generating unit. The steam generating unit comprises a tubular member, a metallic heating element positioned inside the tubular member for heating water and transform it into steam, and an induction coil around the tubular member to heat the metallic heating element.

DE 44 03 386 C1 shows an assembly to apply heat treatment of food within a chamber, with a steam generator comprising a steam pipe and a heating element which is wound around the steam pipe, and with a valve to supply water from a water line to the steam generator at the lower inlet of the steam pipe.

US 6 101 925 A shows a humidity device for an oven comprising a reservoir for water connected by means of a conduit to one end of a lower arranged heating pipe, which has its other end connected to a coupling element by means of another conduit. The heating pipe comprises a heater, which is arranged at one side of the heating pipe and heats the heating pipe, so that water coming from the reservoir can vaporize while flowing through the heating pipe. The vapor flows out of the heating pipe and upwards through the conduit to the coupling element, which leads the vapor flow into a nozzle pipe arranged in the oven.

US 6 100 502 A shows a toaster oven including an oven chamber and a steam generating system with a water tank attached to the toaster oven, from which water flows through a tube into a steam generating chamber with a heating element. A check valve is disposed in flow tube for controlling the flow of water into the steam generating chamber during steam generation. The pressure of the steam drives the steam through a tube into oven chamber.

EP 0 277 337 A2 shows a steam oven with a steam generating system comprising a pot-like evaporation vessel inserted in the bottom of the oven chamber provided with heating elements to heat and vaporize water in evaporation vessel. The evaporation vessel is connected to a water filling container designed as a drawer in the region of the operating panel by means of a water supply line.

JP 54 059373 A shows an oven with a steam generating system, which includes a steam generator and water tank to supply the steam generator with water. The steam generator comprises a pipe and a heater element arranged or wound around the pipe, and is connected to the water tank by means of a water supply tube over a valve unit, which controls the water level inside the pipe.

### SUMMARY OF THE INVENTION

Therefore, the present invention has been made in view of the above problems, and it is an object of the present invention to provide a steam generator for a steam oven, in which a heater is installed in a steam pipe supplying water from a water tank therethrough so that steam can be rapidly generated just when the water passes through the pipe, thereby shortening the cooking time and minimizing the size of the steam oven.

This object is achieved by the steam generator according to claim 1.

A steam generator for a steam oven comprises a water injection unit for supplying water from the outside to the steam generator therethrough; a water tank installed outside a cooking chamber for storing the water supplied through the water injection unit; a flow adjusting unit installed at an outlet of the water tank for adjusting the quantity of the supplied water; a steam pipe connected between the flow adjusting unit and the cooking chamber for changing the water therein into steam and supplying the steam to the inside of the cooking chamber; and a heater installed in the steam pipe for heating the water supplied to the inside of the steam pipe.

The steam pipe includes an inlet and an outlet formed at both upper ends thereof, and is bent at least one time at a portion thereof between the inlet and the outlet to have a U-shaped structure.

The outlet of the steam pipe is positioned at a higher level than the inlet of the steam pipe.

The heater is bent in the same structure as that of the steam pipe.

Preferably, the water injection unit is a sliding type in which a water injection box slidably moves towards the inside and outside of a cabinet.

Further, preferably, the water tank includes a slim-structured tank main body, and a lid covering the upper end of the tank main body.

Preferably, the flow adjusting unit is a solenoid valve installed at the outlet of the water tank.

A steam oven comprises a cooking chamber installed in a cabinet; a water injection unit installed in the cabinet for supplying water from the outside therethrough; a water tank installed outside the cooking chamber for storing the water supplied through the water injection unit; a flow adjusting unit installed at an outlet of the water tank for adjusting the quantity of the supplied water; a steam pipe connected between the flow adjusting unit and the cooking chamber for changing the water therein into steam; a heater installed in the steam pipe for heating the water supplied to the inside of the steam pipe; and a steam supply pipe for connecting the steam pipe to the inside of the cooking chamber.

Since the slim-type water tank is installed outside the cooking chamber and water passing through the steam pipe is heated to generate steam, the steam generator of the present invention reduces the overall size of the oven, thereby relatively increasing the size of the cooking chamber.

Further, since the small quantity of the water passing through the steam pipe is heated to be rapidly changed into steam, the steam generator of the present invention rapidly generates steam without increasing the capacity of the heater, thereby shortening the overall cooking time.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic perspective view of a steam oven having a conventional steam generator;
FIG. 2 is a sectional view of the steam oven shown in FIG. 1;
FIG. 3 is a sectional view of a steam oven having another conventional steam generator;

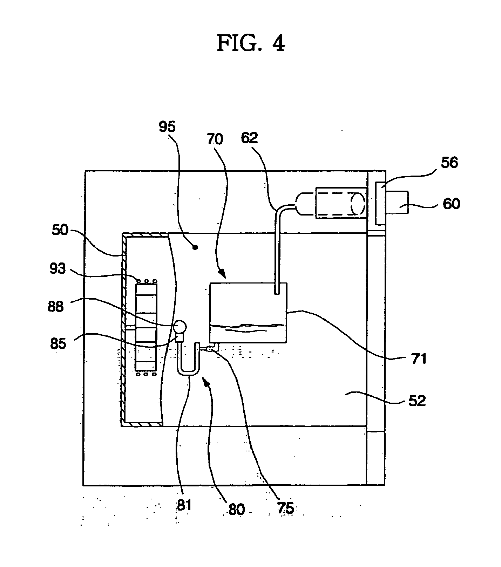

FIG. 4 is a sectional view of a steam oven having a steam generator in accordance with the present invention;

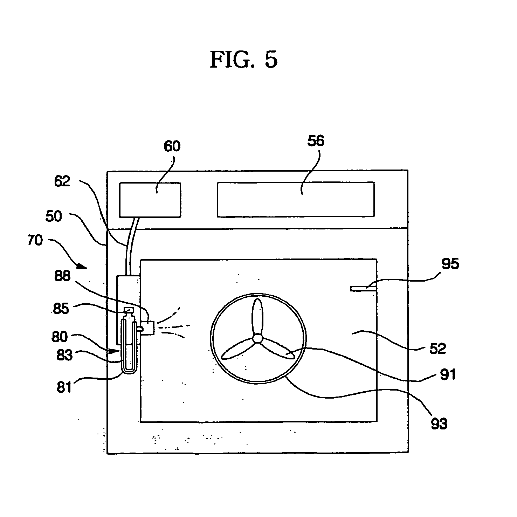

FIG. 5 is a front view of the steam oven in accordance with the present invention;

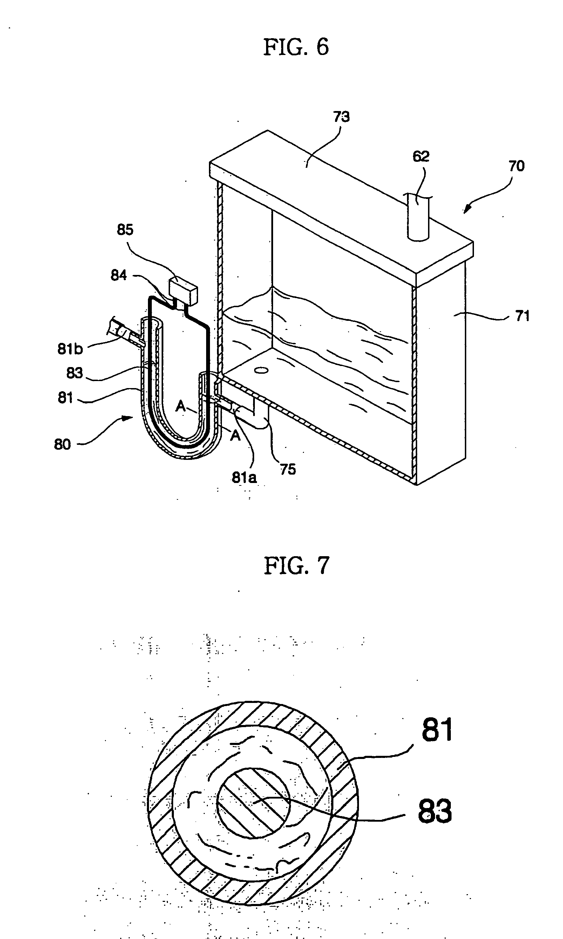

FIG. 6 is an exploded perspective view of an essential part of the steam generator of the present invention; and
FIG. 7 is a sectional view taken along the line A-A of FIG. 6.

### DESCRIPTION OF THE PREFERRED EMBODIMENTS

Now, a preferred embodiment of the present invention will be described in detail with reference to the annexed drawings.

Although there are a plurality of embodiments of a steam generator for a steam oven in accordance with the present invention, the most preferred embodiment will be described as follows. In the following description of the present invention, a detailed description of known functions and configurations incorporated herein will be omitted when it may make the subject matter of the present invention rather unclear.

FIGS. 4 to 7 illustrate a steam oven having a steam generator in accordance with the present invention. More specifically, FIG. 4 is a sectional view of the steam oven, FIG. 5 is a front view of the steam oven, FIG. 6 is an exploded perspective view of an essential part of the steam generator illustrating a water tank and a steam supply pipe, and FIG. 7 is a sectional view taken along the line A-A of FIG. 6.

The steam generator of the present invention, as shown in FIGS. 4 and 5, comprises a water injection unit 60 connected from the upper part of a cabinet 50, provided with a control-operating unit 56 formed thereon, to the inner part of the cabinet 50 for supplying water from the outside to the inside of the cabinet 50, a water tank 70 connected to the water injection unit 60 by a water supply pipe 62 for discharging a designated quantity of water under the condition that the water tank 70 stores the water supplied through the water injection unit 60, and a steam generation unit 80 for heating the water supplied from the water tank 70 to generate steam and supply the steam to the inside of a cooking chamber 52.

Preferably, the water injection unit 60 is a sliding type in which a water injection box slidably moves towards the inside and outside of the cabinet 50.

The water tank 70 has a slim structure, the width of which is short, and, the length of which is long, and is positioned outside the cooking chamber 52. The water tank 70 includes a tank main body 71, and a lid 73 covering the upper end of the tank main body 71.

A solenoid valve 75, serving as a flow adjusting unit for adjusting the quantity of the water discharged to the steam generation unit 80, is installed in an outlet of the water tank 70. Preferably, the solenoid valve 75 is adjusted manually or automatically by a controller provided on the control-operating unit 56.

Preferably, the steam generation unit 80 has a long pipe structure, as shown in FIG. 6, so that the water supplied from the water tank 70 is heated by a heater 83 and changed to steam when the water flows in the steam generation unit 80.

That is, the steam generation unit 80 includes a steam pipe 81 connected to the solenoid valve 75 provided at the outlet of the water tank 70 for receiving water, the heater 83 inserted into the steam pipe 81 in the longitudinal direction for heating the water therein, and a steam supply pipe 85 connected between the steam pipe 81 and the inside of the cooking chamber 52.

The steam pipe 81 includes an inlet 81a formed at one upper end thereof and connected to the water tank 70 or the solenoid valve 75, and an outlet 81b formed at the other upper end thereof and connected to the steam supply pipe 85. The steam pipe 81 is bent at least one time at the portion thereof between the inlet 81a and the outlet 81b. This embodiment illustrates the steam pipe 81 bent in a U shape.

Preferably, the outlet 81b is positioned at a level higher than the inlet 81a so that the steam is smoothly discharged to the outside of the steam pipe 81 through the outlet 81b.

The heater 83 is bent in the same shape as that of the steam pipe 81 so that the heater 83 passes through the steam pipe 81. Preferably, when the steam pipe 81 is bent in a U shape, the heater 83 is bent also in a U shape. Heater terminals 84 and a heater controller 85 are positioned on both upper ends of the heater 83.

A convection fan 91 for circulating air in the cooking chamber 52 is positioned in the cooking chamber 52, and a convection heater 93 for heating the air in the cooking chamber 52 is provided around the convection fan 91.

A temperature sensor 95 for sensing the temperature of the inside of the cooking chamber 52 to control the operations of the heater 83 of the steam generation unit 80 and the convection heater 93 is installed at one side surface of the inside of the cooking chamber 52.

Hereinafter, the operation of the above steam generator for the steam oven in accordance with the present invention will be described.

When a user at the outside injects water into the steam oven through the water injection unit 60, the injected water is introduced into the water tank 70 through the water supply pipe 62.

A designated quantity of the water introduced into the water tank 70 is introduced into the steam pipe 81 according to the opening degree of the solenoid valve 75, and the small quantity of the water introduced into the steam pipe 71 is heated by the heater 83 and rapidly changed into steam. The steam is introduced into the cooking chamber 52.

That is, the steam generation unit 80 momentarily changes the small quantity of the water flowing the steam pipe 81 into steam using the heater 83 installed in the steam pipe 81, and supplies the steam to the inside of the cooking chamber 52 through a hole 88 communicated with the inside of the cooking chamber 52.

The convection fan 91 installed in the cooking chamber 52 is operated to uniformly distribute the steam introduced into the cooking chamber 52, or the convection heater 93 is operated to increase the temperature of the steam according to the cooking methods so that food in the cooking chamber 52 can be cooked at a high temperature.

The temperature sensor 95 positioned in the cooking chamber 52 senses the temperature of the inside of the cooking chamber 52 to cause the control-operating unit 56 to adjust the output of the heater 83 of the steam generation unit 80 or the convection heater 93 in the cooking chamber 52, thereby adjusting the temperature of the inside of the cooking chamber 52 to a desired temperature so that the food in the cooking chamber 52 can be cooked at the desired temperature. Further, the control-operating unit 56 can adjust the opening degree of the solenoid valve 75, thereby properly adjusting the quantity of the water supplied to the steam pipe 81.

As apparent from the above description, the present invention provides a steam generator for a steam oven, in which a slim-type water tank is installed outside a cooking chamber and water passing through a steam pipe is heated to generate steam, thereby reducing the overall size of the oven to relatively increase the size of the cooking chamber.

Further, since the small quantity of the water passing through the steam pipe is heated and rapidly changed into steam, the steam generator of the present invention rapidly generates the steam without increasing the capacity of a heater, thereby shortening the overall cooking time.

Although the preferred embodiment of the present invention has been disclosed for illustrative purposes, those skilled in the art will appreciate that various modifications, additions and substitutions are possible, without departing from the scope of the invention as disclosed in the accompanying claims.

## Claims

1. A steam generator for a steam oven comprising:
a water injection unit (60) for supplying water from the outside to the steam generator therethrough;
a water tank (70) installed outside a cooking chamber (52) for storing the water supplied through the water injection unit (60);
a flow adjusting unit (75) installed at an outlet of the water tank (70) for adjusting the quantity of the supplied water;
a steam pipe (81) connected between the flow adjusting unit (75) and the cooking chamber (52) for changing the water therein into steam and supplying the steam to the inside of the cooking chamber (52); and
a heater (83) installed in the steam pipe (81) for heating the water supplied to the inside of the steam pipe (81),
**characterized in that**
the steam pipe (81) is bent in a U-shaped structure and includes an inlet (81a) and an outlet (81b) formed at both upper ends thereof, wherein the outlet (81b) of the steam pipe (81) is positioned at a higher level than the inlet (81a) of the steam pipe (81), and in that
the heater (83) is bent in the same shape as the steam pipe (81) so that the heater (83) passes through the inside of the steam pipe (81).

2. The steam generator as set forth in claim 1, wherein the water injection unit (60) is a sliding type in which a water injection box slidably moves towards the inside and outside of a cabinet (50).

3. The steam generator as set forth in claim 1, wherein the water tank (70) includes a slim-structured tank main body (71), and a lid (73) covering the upper end of the tank main body (71).

4. The steam generator as set forth in claim 1, wherein the flow adjusting unit (75) is a solenoid valve installed at the outlet of the water tank (70).

5. The steam generator as set forth in claim 1, wherein heater terminals (84) and a heater controller (85) are positioned on both upper ends of the heater (83).

## Patentansprüche

1. Dampfgenerator für einen Dampfofen, der umfasst:
eine Wassereinspritzeinheit (60), um dem Dampfgenerator dadurch Wasser von außen zuzuführen;
einen Wassertank (70), der außerhalb einer Kochkammer (52) zum Speichern des durch die Wassereinspritzeinheit (60) zugeführten Wassers installiert ist;
eine Durchflusseinstelleinheit (75), die an einem Auslass des Wassertanks (70) zum Einstellen der Menge des zugeführten Wassers installiert ist;
eine Dampfleitung (81), die zwischen der Durchflusseinstelleinheit (75) und der Kochkammer (52) zum Ändern des darin befindlichen Wassers in Dampf und zum Zuführen des Dampfes in den Innenraum der Kochkammer (52) angeschlossen ist; und
ein Heizgerät (83), das in der Dampfleitung (81) zum Heizen des dem Innenraum der Dampfleitung (81) zugeführten Wassers installiert ist,
**dadurch gekennzeichnet, dass**
die Dampfleitung (81) in einer U-förmigen Struktur gebogen ist und einen Einlass (81a) und einen Auslass (81b) aufweist, die an ihren beiden oberen Enden gebildet sind, wobei der Auslass (81b) der Dampfleitung (81) auf einem höheren Niveau als der Einlass (81a) der Dampfleitung (81) positioniert ist, und dadurch, dass
das Heizgerät (83) in derselben Form wie die Dampfleitung (81) gebogen ist, so dass das Heizgerät (83) durch den Innenraum der Dampfleitung (81) hindurchführt.

2. Dampfgenerator nach Anspruch 1, wobei die Wassereinspritzeinheit (60) ein Gleittyp ist, in dem sich ein Wassereinspritzkasten gleitend in Richtung des Inneren und des Äußeren eines Gehäuses (50) bewegt.

3. Dampfgenerator nach Anspruch 1, wobei der Wassertank (70) einen schmalstrukturierten Tankhauptkörper (71) und einen Deckel (73), der das obere Ende des Tankhauptkörpers (71) abdeckt, enthält.

4. Dampfgenerator nach Anspruch 1, wobei die Durchflusseinstelleinheit (75) ein Solenoidventil ist, das an dem Auslass des Wassertanks (70) installiert ist.

5. Dampfgenerator nach Anspruch 1, wobei die Heizgerätanschlüsse (84) und eine Heizgerätsteuereinheit (85) auf beiden oberen Enden des Heizgeräts (83) positioniert sind.

## Revendications

1. Générateur de vapeur pour un four à vapeur, comprenant :
une unité d'injection d'eau (60) pour alimenter de l'eau depuis l'extérieur vers le générateur à vapeur à travers celle-ci ;
un réservoir d'eau (70) installé à l'extérieur d'une chambre de cuisson (52) pour stocker l'eau alimentée via l'unité d'injection d'eau (60) ;
une unité d'ajustement d'écoulement (75) installée à une sortie du réservoir d'eau (70) pour ajuster la quantité de l'eau alimentée ;
un tube à vapeur (81) connecté entre l'unité d'ajustement d'écoulement (75) et la chambre de cuisson (52) pour changer l'eau à l'intérieur en vapeur et alimenter la vapeur à l'intérieur de la chambre de cuisson (52) ; et
un dispositif chauffant (83) installé dans le tube à vapeur (81) pour chauffer l'eau alimentée à l'intérieur du tube à vapeur (81),
**caractérisé en ce que**
le tube à vapeur (81) est cintré dans une structure en forme de U et inclut une entrée (81a) et une sortie (81b) formées à ses deux extrémités supérieures, dans lequel la sortie (81b) du tube à vapeur (81) est positionnée à un niveau plus élevé que l'entrée (81a) du tube à vapeur (81), et en ce que
le dispositif chauffant (83) est cintré sous la même forme que le tube à vapeur (81), de telle façon que le dispositif chauffant (83) passe à travers l'intérieur du tube à vapeur (81).

2. Générateur de vapeur selon la revendication 1, dans lequel l'unité d'injection d'eau (60) est du type à coulissement dans lequel une boîte d'injection d'eau se déplace en coulissement vers l'intérieur et vers l'extérieur d'un récipient (50).

3. Générateur de vapeur selon la revendication 1, dans lequel le résemoir d'eau (70) inclut un corps principal de réservoir (71) à structure mince, et un couvercle (73) couvrant l'extrémité supérieure du corps principal de réservoir (71).

4. Générateur de vapeur selon la revendication 1, dans lequel l'unité d'ajustement d'écoulement (75) est une valve solénoïde installée à la sortie du réservoir d'eau (70).

5. Générateur de vapeur selon la revendication 1, dans lequel des bornes (84) et un contrôleur (85) pour le dispositif chauffant sont positionnés sur les deux extrémités supérieures du dispositif chauffant (83).
